# EUROPEAN PATENT APPLICATION

(11) **EP 2 664 478 A1**
(43) Date of publication of application: **20.11.2013**
(21) Application number: 11855635.6
(22) Date of filing: 27.12.2011
(51) Int. Cl.: B60L 3/00, B60K 6/445, B60L 11/14, B60W 10/26, B60W 20/00, G01C 21/26

(54) **VEHICLE CONTROL APPARATUS**

(30) Priority: 11.01.2011 JP 2011003219
(71) Applicant: TOYOTA JIDOSHA KABUSHIKI KAISHA, Toyota-shi, Aichi-ken, 471-8571 (JP)
(72) Inventor: SUZUKI Naoto, Toyota-shi Aichi 471-8571 (JP)
(74) Representative: Winter, Brandl, Fürniss, Hübner, Röss, Kaiser, Polte - Partnerschaft
(86) International application number: PCT/JP2011/080260
(87) International publication number: WO 2012/096130

(57) **Abstract**

A GPS 71, a map information DB 72, and a communication unit 81 which are included in a vehicle control apparatus 1 acquire road information on a road on which a vehicle travels, and a hybrid ECU 30 sets a battery residual capacity target value which is a target value of residual capacity of a battery which is a power source driving the vehicle. In addition, the hybrid ECU 30 predicts a vehicle driver's operation, based on the road information acquired by the GPS 71 and the like. Furthermore, the hybrid ECU 30 modifies the battery residual capacity target value which has been set, based on the road information, according to the predicted vehicle driver's operation. Therefore, it is possible to more appropriately set the battery residual capacity target value according to the road information on the road, and the driver's operation performed on the road.

## Description

An embodiment of the present invention relates to a vehicle control apparatus, and more particularly to a vehicle control apparatus that sets a battery residual capacity target value which is a target value of residual capacity of a battery which is a power source driving a vehicle.

### Background Art

A hybrid vehicle with an internal combustion engine and an electric motor is proposed which can travel by a driving force of at least one of the internal combustion engine and the electric motor. For example, Patent Literature 1 discloses a hybrid vehicle in which a controller calculates a battery residual capacity from an output of a sensor for detecting a battery current and a voltage, sets a battery residual capacity target value depending on a travel path, based on information of road information and a current location which are supplied from a navigation processing unit, and adjusts outputs of the motor and the engine so that an actual battery residual capacity may approach the battery residual capacity target value, and thereby an efficient regeneration charge of the battery can be performed when the travel path is known in advance, and exhaust gas can be reduced.

### Citation List

### Patent Literature

[Patent Literature 1] Japanese Unexamined Patent Application Publication No. 8-126116

### Summary of Invention

### Technical Problem

However, in the above-described technology, since the battery residual capacity target value is set from the road information and the travel path information only, for example, the battery residual capacity target value is set low by expecting the regeneration at the time of a future downhill road from the information on the road elevation. Thereafter a driver attempts to increase a vehicle speed before the downhill road, whereby causing a shortage in the battery residual capacity and insufficient assistance from the motor, and thereby it may happen that precludes an acceleration.

An embodiment of the present invention is made in consideration of these circumstances, and an object thereof is to provide a vehicle control apparatus which can more appropriately set a battery residual capacity target value.

### Solution to Problem

An embodiment of the present invention is a vehicle control apparatus including a road information acquisition unit that acquires road information on a road on which a vehicle travels; a battery residual capacity target value setting unit that sets a battery residual capacity target value which is a target value of residual capacity of a battery which is a power source driving the vehicle, based on the road information acquired by the road information acquisition unit ; and an operation prediction unit that predicts a driver's operation of the vehicle, based on the road information acquired by the road information acquisition unit, wherein the battery residual capacity target value setting unit modifies the battery residual capacity target value which has been set, based on the road information, according to the vehicle driver's operation predicted by the operation prediction unit.

According to this configuration, the road information acquisition unit acquires the road information on the road on which the vehicle travels, and the battery residual capacity target value setting unit sets the battery residual capacity target value which is the target value of the residual capacity of the battery which is the power source driving the vehicle, based on the road information acquired by the road information acquisition unit. In addition, the operation prediction unit predicts the vehicle driver's operation, based on the road information acquired by the road information acquisition unit. Furthermore, the battery residual capacity target value setting unit modifies the battery residual capacity target value which has been set, based on the road information, according to the vehicle driver's operation predicted by the operation prediction unit. Therefore, it is possible to more appropriately set the battery residual capacity target value, according to the road information on the road and the driver's operation performed on the road.

In this case, the battery residual capacity target value setting unit sets the battery residual capacity target value, based on at least one of an elevation, a width, a curvature of a curve, a consecutive number of the curve, and a slope of the road, which are included in the road information acquired by the road information acquisition unit, and the operation prediction unit predicts the vehicle driver's operation, based on at least one of information on a signal displayed by a traffic signal and information on a traffic volume of the road, which are included in the road information acquired by the road information acquisition unit.

According to this configuration, the battery residual capacity target value setting unit sets the battery residual capacity target value, based on static information such as the elevation, the width, the curvature of the curve, the consecutive number of the curve, and the slope of the road which are included in the road information acquired by the road information acquisition unit. Therefore, in a case where contingencies do not occur in road situations, it is possible to accurately set a battery residual capacity target value. In addition, the operation prediction unit predicts the vehicle driver's operation, based on the information on the signal displayed by the traffic signal and the dynamic information such as the road traffic volume, which are included in the road information acquired by the road information acquisition unit. Therefore, it is possible to predict the driver's operation responding to the contingencies such as a stop signal light or a traffic jam.

In addition, the battery residual capacity target value setting unit does not modify the battery residual capacity target value which has been set, based on the road information, in a case where the battery residual capacity target value setting unit sets the battery residual capacity target value by predicting either a regeneration using a downhill road or a regeneration using a vehicle deceleration from the road information acquired by the road information acquisition unit, when the driver's acceleration operation is predicted from the vehicle driver's operation predicted by the operation prediction unit before the regeneration.

According to this configuration, the battery residual capacity target value setting unit does not modify the battery residual capacity target value which has been set, based on the road information, in a case where the battery residual capacity target value setting unit sets the battery residual capacity target value by predicting either the regeneration using the downhill road or the regeneration using the vehicle deceleration from the road information acquired by the road information acquisition unit, when the driver's acceleration operation is predicted from the vehicle driver's operation predicted by the operation prediction unit before the regeneration. Therefore, for example, the battery residual capacity target value is set low by expecting the regeneration at the time of a future downhill road from the information on the road elevation. Thereafter a driver attempts to increase a vehicle speed before the downhill road, whereby causing a shortage in the battery residual capacity and insufficient assistance from the motor. Accordingly, it is possible to prevent a situation which precludes the acceleration.

In this case, the battery residual capacity target value setting unit decreases the battery residual capacity target value set, based on the road information, in a case where the battery residual capacity target value setting unit sets the battery residual capacity target value by predicting either the regeneration using the downhill road or the regeneration using the vehicle deceleration from the road information acquired by the road information acquisition unit, when the driver's acceleration operation is not predicted from the vehicle driver's operation predicted by the operation prediction unit before the regeneration.

According to this configuration, in a case where the battery residual capacity target value setting unit sets the battery residual capacity target value by predicting either the regeneration using the downhill road or the regeneration using the vehicle deceleration from the road information acquired by the road information acquisition unit, when the driver's acceleration operation is predicted from the vehicle driver's operation predicted by the operation prediction unit before the regeneration, the battery residual capacity target value setting unit decreases the battery residual capacity target value which has been set, based on the road information. Therefore, it is possible to prevent a disadvantage or a loss caused by an excessive charge depending on the road environment.

In addition, the battery residual capacity target value setting unit does not modify the battery residual capacity target value set, based on the road information, in a case where the battery residual capacity target value setting unit sets the battery residual capacity target value by predicting either a decrement of the battery residual capacity due to a vehicle acceleration or a decrement of the battery residual capacity due to an uphill road from the road information acquired by the road information acquisition unit, when the driver's deceleration operation is predicted before the decrement of the battery residual capacity.

According to this configuration, in a case where the battery residual capacity target value setting unit sets the battery residual capacity target value by predicting either the decrement of the battery residual capacity due to the uphill road or the decrement of the battery residual capacity due to the vehicle acceleration from the road information acquired by the road information acquisition unit, when the driver's deceleration operation is predicted before the decrement of the battery residual capacity, the battery residual capacity target value setting unit does not modify the battery residual capacity target value set, based on the road information. Therefore, for example, the target battery residual capacity is set high in preparation for a battery discharge at the time of a future uphill from the information on the road elevation, and thereby the loss and the disadvantage due to the excessive charge can be prevented from occurring, since the battery residual capacity becomes excessive when the driver decreases the vehicle speed before going uphill thereafter.

In this case, the battery residual capacity target value setting unit increases the battery residual capacity target value which has been set, based on the road information, in a case where the battery residual capacity target value setting unit sets the battery residual capacity target value by predicting either the decrement of the battery residual capacity due to the vehicle acceleration or the decrement of the battery residual capacity due to the uphill road from the road information acquired by the road information acquisition unit, when the driver's deceleration operation is not predicted before the decrement of the battery residual capacity.

According to this configuration, in a case where the battery residual capacity target value setting unit sets the battery residual capacity target value by predicting either the decrement of the battery residual capacity due to the uphill road or the decrement of the battery residual capacity due to the vehicle acceleration from the road information acquired by the road information acquisition unit, when the driver's deceleration operation is predicted before the decrement of the battery residual capacity, the battery residual capacity target value setting unit increases the battery residual capacity target value which has been set, based on the road information. Therefore, it is possible to prevent the insufficient charge depending on the road environment.

In addition, the vehicle includes an internal combustion engine and an electric motor, and is a hybrid vehicle which is capable of traveling using at least one driving force of the internal combustion engine and the electric motor.

According to this configuration, the vehicle includes the internal combustion engine and the electric motor, and is the hybrid vehicle which is capable of traveling using at least one driving force of the internal combustion engine and the electric motor. Therefore, it is possible to prevent the degraded acceleration caused by an insufficient battery residual capacity, and to prevent the loss caused by the excessive charge, thereby enabling improved fuel efficiency.

### Advantageous Effects of Invention

According to the vehicle control apparatus of the embodiment of the present invention, a battery residual capacity target value can be more appropriately set.

### Brief Description of Drawings

Fig. 1 is a block diagram illustrating a configuration of a vehicle control apparatus according to an embodiment.
Fig. 2 is a flowchart illustrating an operation of a vehicle control apparatus according to an embodiment.

### Description of Embodiments

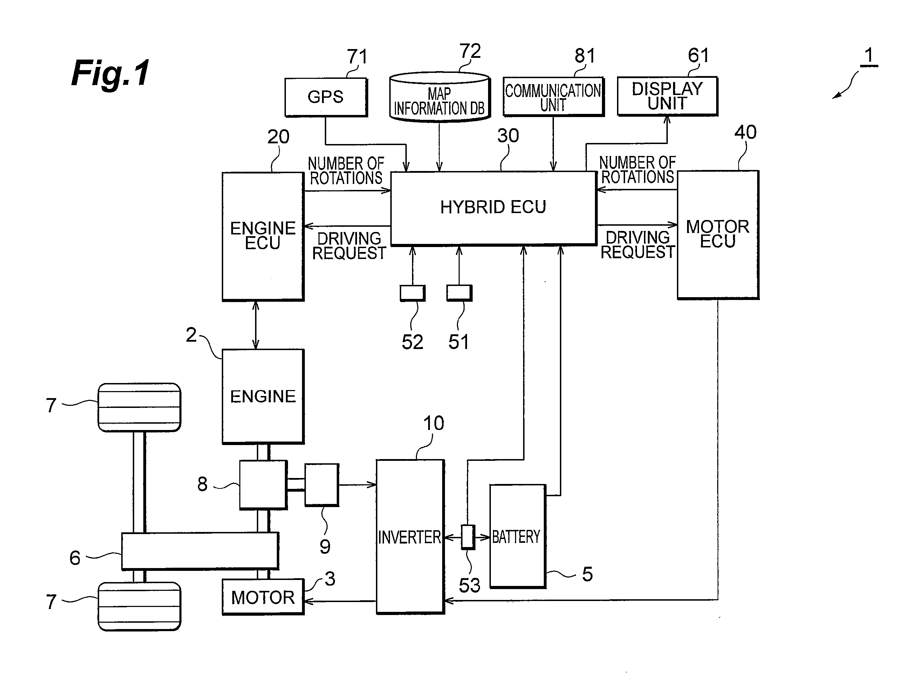

Hereinafter, an embodiment of the present invention will be described with reference to the accompanying drawings. As illustrated in Fig. 1, a vehicle control apparatus 1 according to the present embodiment is installed in a hybrid vehicle on which an engine 2 and a motor 3 are mounted and which can travel using a drive of the engine 2 or the motor 3. The motor 3 is an electric motor driven by an electric power supplied from a battery 5, mechanically connected to driving wheels 7 via a speed reducer 6, and transmits a driving force to the driving wheels 7. The engine 2 is mechanically connected to the driving wheels 7 via a power distribution mechanism 8 and the speed reducer 6, and transmits the driving force to the driving wheels 7. For example, a planetary gear mechanism is used as the power distribution mechanism 8.

The power distribution unit 8 is connected to a generator 9. The generator 9 generates electricity by receiving the driving force of the engine 2 or the driving wheels 7. The generator 9 and the motor 3 are electrically connected to the battery 5 via an inverter 10. An alternating current power generated by the generator 9 charges the battery 5 after being converted into a direct current power by the inverter 10. At this time, the battery 5 stores the electric power generated by the generator 9. The direct current power in the battery 5 is supplied to the motor 3 after being converted into the alternating current power by the inverter 10, and the motor 3 is driven by the supplied alternating current power.

An engine ECU 20, a hybrid ECU 30, and a motor ECU 40 are installed in the vehicle control apparatus 1. The engine ECU 20 is a controller which outputs a throttle opening degree command signal of the engine 2 according to a driving request from the hybrid ECU 30. The motor ECU 40 is a controller which outputs a driving signal of the motor 3 via the inverter 10 according to the driving request from the hybrid ECU 3 0, and connected to the inverter 10.

The hybrid ECU 30 calculates an engine output, a motor torque and the like which are required, from an accelerator opening degree, vehicle speed and the like, outputs a driving request signal to the engine ECU 20 and the motor ECU 40, and is a controller which controls the drive of the engine 2 and the motor 3. The hybrid ECU 30 performs the drive of the vehicle only by the motor 3 without starting the engine 2 (an EV travel), when the hybrid vehicle is in a low load region with a poor engine efficiency (for example, when accelerating the vehicle or travelling at an extremely low speed). The hybrid ECU 30 starts the engine 2 which can output a large torque, and stops the motor 3 (an engine travel), when the vehicle speed reaches a high speed region with a good engine efficiency. In addition, when a large output is required, for example when accelerating the vehicle or going uphill, a desired output is acquired by simultaneously driving the engine 2 and the motor 3 (a hybrid travel).

In addition, the hybrid ECU 30 sets target battery residual capacity which is a predetermined target value with regard to a charge quantity of the battery 5, that is, a SOC (State of Charge) value, and functions as a controller which controls so as to maintain a preset target battery residual capacity. For example, the SOC value of the battery 5 is detected, and an electricity generation is performed by appropriately adjusting an engine output so that the SOC value may be the preset target battery residual capacity, thereby the SOC value is controlled.

In addition, in Fig. 1, the engine ECU 20, the hybrid ECU 30, and the motor ECU 40 are separately installed, respectively, but all or some of them may be configured integrally.

In the vehicle, an EV (Electric Vehicle) travel switch 51 is installed. The EV travel switch 51 is a switch which enables an electric motor travel according to a vehicle driver's intention. When the EV travel switch 51 is turned on by the driver, the vehicle enters an EV travel mode, and thereby the EV travel can be performed by the drive of the motor 3. In other words, when the EV travel switch 51 turns on, the vehicle forcibly enters the EV travel mode (a travel mode using the driving force of the motor 3 only). In this manner, in general, even in a state where the engine 2 should be operated, the engine 2 is forcibly stopped and at the same time the motor 3 is driven for the travel of the vehicle.

In the vehicle, a charging switch 52 is installed. The charging switch 52 is a switch which increases the charge quantity of the battery 5 by setting high the target charge quantity of the battery 5 according to the vehicle driver's intention. When the charging switch 52 is turned on by the driver, the vehicle enters a charging mode, the target charge quantity that is stored in the hybrid ECU 30 is increased, the engine output is appropriately adjusted, and the SOC value of the battery 5 is more increased than normal by the electricity generation of the generator 9.

A current sensor 53 is installed in the middle of wires which connect the inverter 10 to the battery 5. The current sensor 53 detects a current capacity flowing between the inverter 10 and the battery 5. Based on an output signal of the current sensor 53, the SOC value of the battery 5 is calculated. In addition, the battery 5 is connected to the hybrid ECU 30, and the voltage stored in the battery 5 is input to the hybrid ECU 30. The voltage value is used as a correction value when the SOC value is calculated.

In the vehicle, a display unit 61 is installed. The display unit 61 notifies the driver of a vehicle state by displaying a charging mode, an EV travel mode, and a hybrid travel mode. For example, the display unit 61 is installed on an installment panel so as to be easily recognized by the driver, using a charging mode display lamp, an EV travel mode display lamp, a hybrid travel mode display lamp, and the like. The charging mode display lamp blinks to display that it is in the middle of charge during the charging mode, is turned on to display that the charge is completed during the charging mode, and is turned off at any time except for the charging mode. The EV travel mode display lamp is turned on during the EV travel mode, and turned off at any time except for the EV travel mode. The hybrid travel mode display lamp is turned on during the hybrid travel mode, and turned off at any time except for the hybrid travel mode.

In addition, the display unit 61 may be configured by an audio speaker or a display device such as an LCD (liquid crystal display), in addition to the lamp.

In addition, a GPS 71 and a map information DB 72 are installed. The GPS 71 performs positioning of the vehicle by receiving a signal from a GPS (Global Positioning System) satellite. The map information DB 72 is a database which stores map information. The GPS 71 and the map information DB 72 are connected to the hybrid ECU 30. The hybrid ECU 30 acquires information on road environment such as an elevation, a curvature, and a slope of the road on which the vehicle travels using the GPS 71 and the map information DB 72. In addition, a communication unit 81 is connected to the hybrid ECU 30. The hybrid ECU 30 acquires the information on the road environment such as the elevation, the curvature, and the slope of the road on which the vehicle travels by communicating with other vehicles or roadside facilities using the communication unit 81.

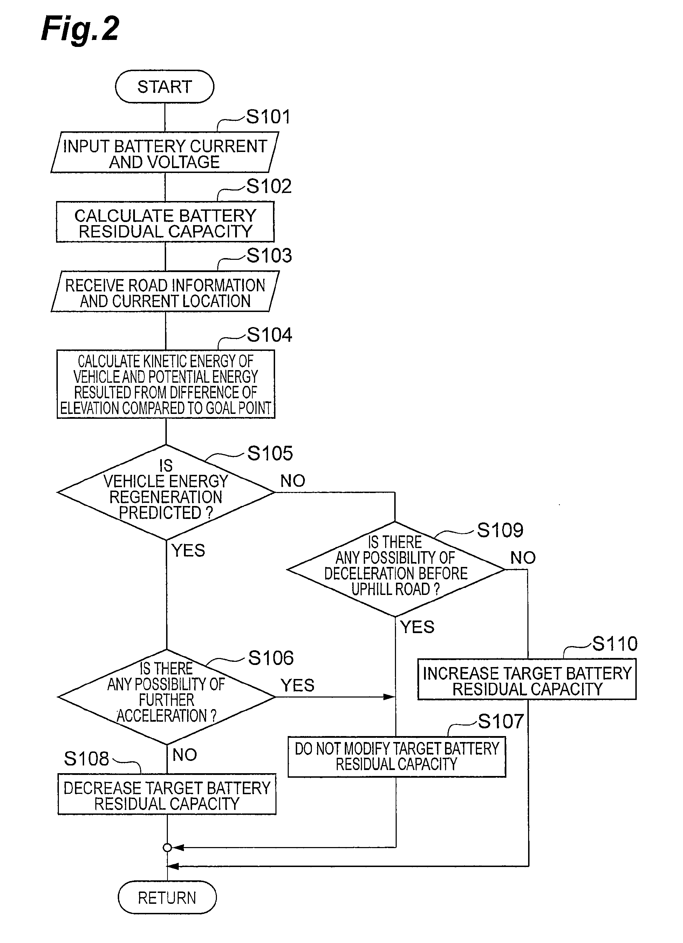

Hereinafter, an operation of the vehicle control apparatus 1 according to the present embodiment will be described. As illustrated in Fig. 2, a current value and a voltage value of the battery 5 that are detected by the current sensor 53 are input to the hybrid ECU 30 in the vehicle control apparatus 1 during the travel of the vehicle (S101). The hybrid ECU 30 calculates the SOC which is the residual quantity of the battery 5, from the input current value and the voltage value (S102).

The hybrid ECU 30 receives the current location of the vehicle and the road information from the GPS 71, the map information DB 72 and the communication unit 81 (S103). Information included in the road information includes static information which does not vary in a short time (a few minutes to a few hours), such as the elevation, a width, the curvature of a curve, a consecutive number of the curve, and a slope of the road. In addition, the information included in the road information includes dynamic information which varies in a short time (a few minutes to a few hours), such as information for determining whether or not a traffic jam occurs ahead of the vehicle and information for determining whether or not a signal of a traffic signal ahead of the vehicle turns to a stop signal.

The hybrid ECU 30 calculates the kinetic energy of the vehicle and potential energy due to a difference of elevation between the goal point and the current location by using the information on the elevation, the width, the curvature of the curve, the consecutive number of the curve, and a slope of the road, which are included in the road information (S104). The hybrid ECU 30 determines whether or not the regeneration of the vehicle is predicted from the kinetic energy of the vehicle and the positional energy generated by the difference of elevation between the goal point and the current location (S105).

In a case where the regeneration of the vehicle is predicted (S105), the hybrid ECU 30 determines whether or not an acceleration may be further performed before the regeneration of the vehicle by the driver's operation (S106). For example, in front of a place where the regeneration is performed, in a case where an expected travel path has many curves, a narrow road or a traffic jam, or a stop signal such as red light is lit, the hybrid ECU 30 can determine that the further acceleration is unlikely to be performed. On the other hand, for example, in front of the place where the regeneration is performed, in a case where the expected travel path has a little number of curves, a wide road without any traffic jam, or a stop signal such as the red light is not lit for the time being, the hybrid ECU 30 can determine that the further acceleration is likely to be performed.

When it is determined that the further acceleration is likely to be performed before the regeneration (S106), the hybrid ECU 30 does not modify the target battery residual capacity (S107), only by the static information such as the elevation, the width, the curvature of the curve, the consecutive number of the curve, and the slope of the road, even in a case where the regeneration is predicted by deceleration or a downhill road (S104). On the other hand, when it is determined that the further acceleration is unlikely to be performed before the regeneration (S106), the hybrid ECU 30 decreases the target battery residual capacity (S108).

In addition, in S105, when the regeneration of the vehicle is not predicted (S104), the hybrid ECU 30 determines whether or not the deceleration is likely to be performed, before the vehicle starts to accelerate or enters an uphill road according to the driver's operation (S109).

For example, in front of a place where the vehicle accelerates or enters the uphill road, in a case where the expected travel path has many curves, the narrow road or a traffic jam, or a stop signal such as the red light is lit when the vehicle passes through, the hybrid ECU 30 determines that the deceleration is likely to be performed. On the other hand, for example, in front of the place where the vehicle start to accelerate or enters the uphill road, in a case where the expected travel path has a little number of curves, the wide road without any traffic jam, or a stop signal such as the red light is not lit for the time being, the hybrid ECU 30 determines that the deceleration is unlikely to be performed.

When the further deceleration is likely to be performed (S109), the hybrid ECU 30 does not modify the target battery residual capacity, only by the static information such as the elevation, the width, the curvature of the curve, the consecutive number of the curve, and the slope of the road, even in a case where the regeneration is predicted by the deceleration or the downhill road (S107). On the other hand, when the further deceleration is unlikely to be performed (S109), the hybrid ECU 30 increases the target battery residual capacity (S110).

In the present embodiment, the GPS 71, the map information DB 72, and the communication unit 81 which are included in the vehicle control apparatus 1 acquire the road information on the road on which the vehicle travels, and the hybrid ECU 30 sets the target battery residual capacity that is a target value of the residual capacity of the battery which is a power source driving the vehicle. In addition, the hybrid ECU 3 0 predicts the vehicle driver's operation, based on the road information acquired by the GPS 71 or the like. Furthermore, the hybrid ECU 30 modifies the target battery residual capacity which has been set, based on the road information, according to the predicted vehicle driver's operation. As a result, according to the road information on the road and the driver's operation performed on the road, it is possible to more appropriately set than the target battery residual capacity.

In addition, in the present embodiment, the hybrid ECU 30 sets the target battery residual capacity, based on the static information such as the elevation, the width, the curvature of the curve, the consecutive number of the curve, and the slope of the road, which are acquired by the GPS 71, the map information DB 72, and the communication unit 81. Therefore, an accurate target battery residual capacity can be set, in a case where the contingencies do not occur in road situations. In addition, the hybrid ECU 30 predicts the driver's operation, based on dynamic information such as the road traffic volume and information on a signal displayed by the traffic signal, which are included in the road information acquired by the GPS 71, the map information DB 72, and the communication unit 81. Therefore, the hybrid ECU 30 can predict the driver's operation responding to the contingencies such as a stop signal light or a traffic jam.

In addition, the hybrid ECU 30 does not modify the target battery residual capacity set, based on the road information, in a case where either the regeneration using the vehicle deceleration or the regeneration using the downhill road is predicted from the road information acquired by the GPS 71 in the vehicle control apparatus 1, when the driver's acceleration operation is predicted from the vehicle driver's operation predicted by the hybrid ECU 30 before the regeneration. Therefore, for example, the battery residual capacity target value is set low by expecting the regeneration at the time of a future downhill road from the information on the road elevation. Thereafter the driver attempts to increase the vehicle speed before the downhill road, whereby causing a shortage in the battery residual capacity and insufficient assistance from the motor. Accordingly, it is possible to prevent a situation which precludes the acceleration.

In addition, the hybrid ECU 30 decreases the target battery residual capacity set, based on the road information, in the present embodiment, in a case where either the regeneration by the vehicle deceleration or the regeneration by the downhill road is predicted from the road information acquired by the GPS 71 or the like in the vehicle control apparatus 1, when the driver's acceleration operation is predicted from the vehicle driver's operation predicted by the hybrid ECU 30 before the regeneration. Therefore, it is possible to prevent a disadvantage or a loss caused by an excessive charge depending on the road environment.

In addition, the hybrid ECU 30 does not modify the target battery residual capacity set, based on the road information, in the present embodiment, in a case where either battery residual capacity reduction by the vehicle acceleration or battery residual capacity reduction by the uphill road is predicted from the road information acquired by the GPS 71 in the vehicle control apparatus 1, when the driver's deceleration operation is predicted before the battery residual capacity is reduced. Therefore, for example, the target battery residual capacity is set high in preparation for a battery discharge at the time of a future uphill from the information on the road elevation, and thereby the loss and the disadvantage due to excessive charge can be prevented from occurring, since the battery residual capacity becomes excessive when the driver decreases the vehicle speed before going uphill thereafter.

In addition, the hybrid ECU 30 increases the target battery residual capacity set, based on the road information, in the present embodiment, in a case where either the battery residual capacity reduction by the vehicle acceleration or the battery residual capacity reduction by the uphill road is predicted from the road information acquired by the GPS 71 in the vehicle control apparatus 1, when the driver's deceleration operation is not predicted before the battery residual capacity is reduced. Therefore, it is possible to prevent the insufficient charge depending on the road environment.

Furthermore, in the present embodiment, the vehicle with the vehicle control apparatus 1, an internal combustion engine, and the electric motor is a hybrid vehicle which can travel using at least one driving force of the internal combustion engine and the electric motor. Therefore, according to the present invention, it is possible to prevent the degraded acceleration caused by an insufficient battery residual capacity, and to prevent a loss caused by the excessive charge, thereby enabling improved fuel efficiency.

It is to be acknowledged that the present invention is not limited to the embodiments described above, and various modifications may be made within the scope without departing from the gist of the present invention. For example, the vehicle with the vehicle control apparatus 1 is not necessarily limited to the hybrid vehicle as described above, and may include a generator having both a motor function and a generator function, if it is possible to travel using the driving force of the electric motor. In addition, the hybrid vehicle in which the vehicle control apparatus 1 is installed may use any type of a series type that perform the wheel driving using the motor and uses the engine as a power supply source for the generator and a parallel type which enables the wheel driving using both of the engine and the motor.

### Industrial Applicability

According to the vehicle control apparatus of an embodiment of the present invention described above, it is possible to appropriately set the target battery residual capacity.

### Reference Signs List

- 1;: vehicle control apparatus
- 2;: engine
- 3;: motor
- 5;: battery
- 6;: speed reducer
- 7;: driving wheels
- 8;: power distribution mechanism
- 9;: generator
- 10;: inverter
- 20;: engine ECU
- 30;: hybrid ECU
- 40;: motor ECU
- 51;: EV travel switch
- 52;: charging switch
- 53;: current sensor
- 61;: display unit
- 71;: GPS
- 72;: map information DB
- 81;: communication unit

## Claims

1. A vehicle control apparatus comprising:
a road information acquisition unit that acquires road information on a road on which a vehicle travels;
a battery residual capacity target value setting unit that sets a battery residual capacity target value which is a target value of residual capacity of a battery which is a power source driving the vehicle, based on the road information acquired by the road information acquisition unit; and
an operation prediction unit that predicts a driver's operation of the vehicle, based on the road information acquired by the road information acquisition unit,
wherein the battery residual capacity target value setting unit modifies the battery residual capacity target value which has been set, based on the road information, according to the vehicle driver's operation predicted by the operation prediction unit.

2. The vehicle control apparatus according to claim 1,
wherein the battery residual capacity target value setting unit sets the battery residual capacity target value, based on at least one of an elevation, a width, a curvature of a curve, a consecutive number of the curve, and a slope of the road, which are included in the road information acquired by the road information acquisition unit, and
wherein the operation prediction unit predicts the vehicle driver's operation, based on at least one of information on a signal displayed by a traffic signal and information on a traffic volume of the road, which are included in the road information acquired by the road information acquisition unit.

3. The vehicle control apparatus according to claim 1 or 2,
wherein, the battery residual capacity target value setting unit does not modify the battery residual capacity target value which has been set, based on the road information, in a case where the battery residual capacity target value setting unit sets the battery residual capacity target value by predicting either a regeneration using a downhill road or a regeneration using a vehicle deceleration from the road information acquired by the road information acquisition unit, when the driver's acceleration operation is predicted from the vehicle driver's operation predicted by the operation prediction unit before the regeneration.

4. The vehicle control apparatus according to claim 3,
wherein, the battery residual capacity target value setting unit decreases the battery residual capacity target value which has been set, based on the road information, in a case where the battery residual capacity target value setting unit sets the battery residual capacity target value by predicting either the regeneration using the downhill road or the regeneration using the vehicle deceleration from the road information acquired by the road information acquisition unit, when the driver's acceleration operation is not predicted from the vehicle driver's operation predicted by the operation prediction unit before the regeneration.

5. The vehicle control apparatus according to any one of claims 1 to 4,
wherein the battery residual capacity target value setting unit does not modify the battery residual capacity target value which has been set, based on the road information, in a case where the battery residual capacity target value setting unit sets the battery residual capacity target value by predicting either a decrement of the battery residual capacity due to a vehicle acceleration or a decrement of the battery residual capacity due to an uphill road from the road information acquired by the road information acquisition unit, when the driver's deceleration operation is predicted before the decrement of the battery residual capacity.

6. The vehicle control apparatus according to claim 5,
wherein the battery residual capacity target value setting unit increases the battery residual capacity target value which has been set, based on the road information, in a case where the battery residual capacity target value setting unit sets the battery residual capacity target value by predicting either the decrement of the battery residual capacity due to the vehicle acceleration or the decrement of the battery residual capacity due to the uphill road from the road information acquired by the road information acquisition unit, when the driver's deceleration operation is not predicted before the decrement of the battery residual capacity.

7. The vehicle control apparatus according to any one of claims 1 to 6,
wherein the vehicle includes an internal combustion engine and an electric motor, and is a hybrid vehicle which is capable of traveling using at least one driving force of the internal combustion engine and the electric motor.
